# EUROPÄISCHE PATENTSCHRIFT

(11) **EP 3 990 990 B1**
(45) Veröffentlichungstag und Bekanntmachung des Hinweises auf die Patenterteilung: **30.10.2024**
(21) Anmeldenummer: 20734178.5
(22) Anmeldetag: 22.06.2020
(51) Int. Cl.: G05B 19/404, G01H 13/00, B23B 37/00, B06B 1/02, G05B 19/4155

(54) **VERFAHREN UND VORRICHTUNG ZUM STEUERN EINER ULTRASCHALL-WERKZEUGEINHEIT FÜR DIE SPANENDE BEARBEITUNG AN EINER WERKZEUGMASCHINE**
METHOD AND DEVICE FOR CONTROLLING AN ULTRASONIC TOOL UNIT FOR A MACHINING PROCESS ON A MACHINE TOOL
PROCÉDÉ ET DISPOSITIF DE COMMANDE D'UNE UNITÉ D'OUTIL ULTRASONIQUE POUR L'USINAGE PAR ENLÈVEMENT DE COPEAUX SUR UNE MACHINE-OUTIL

(30) Priorität: 25.06.2019 DE 102019209191
(43) Veröffentlichungstag der Anmeldung: 04.05.2022
(73) Patentinhaber: DMG MORI Ultrasonic Lasertec GmbH, 55758 Stipshausen (DE)
(72) Erfinder: MARX, Heiko, 54497 Morbach (DE); GOEBEL, Phillip, 55743 Kirschweiler (DE); FRANZMANN, Fabian, 55758 Veitsrodt (DE)
(74) Vertreter: MERH-IP Matias Erny Reichl Hoffmann Patentanwälte PartG mbB
(86) Internationale Anmeldenummer: PCT/EP2020/067320
(87) Internationale Veröffentlichungsnummer: WO 2020/260189

(56) Entgegenhaltungen:
- EP-A1- 2 803 455
- CN-A- 106 694 932
- DE-A1- 102016 214 699
- US-A1- 2015 352 713

## Beschreibung

Die vorliegende Erfindung betrifft ein Verfahren und eine Vorrichtung zum Steuern einer Ultraschall-Werkzeugeinheit für die spanende Bearbeitung eines Werkstücks an einer Werkzeugmaschine.

### HINTERGRUND DER ERFINDUNG

In Stand der Technik sind Werkzeugmaschinen bekannt, bei denen bei einer spanenden Bearbeitung eines Werkstücks durch ein Werkzeug der Rotationsbewegung des Werkzeugs eine Ultraschallschwingung des Werkzeugs überlagert werden kann.

EP 1 763 416 B1 beschreibt in diesem Zusammenhang ein Werkzeug mit einem Werkzeughalter, der an einem ersten Ende eine Werkzeughalteraufnahme zum Adaptieren an eine drehbare Spindelnase, und an einem zweiten, dem ersten gegenüberliegenden Ende eine Werkzeugaufnahme aufweist, und mit einem in die Werkzeugaufnahme einsetzbaren Werkzeugkopf, wobei der Werkzeughalter einen Schwingungsmotor umfasst.

In US 2015/352713 A1 wird eine Vorrichtung beschrieben, bei der sich eine Werkzeugseite in Bezug auf eine Hauptkörperseite dreht, und die in der Lage ist, eine Übertragung eines elektrischen Signals von der Werkzeugseite zur Hauptkörperseite zu erzeugen, bei effektiver Ansteuerung eines werkzeugseitig vorgesehenen Ultraschallwandlers. Ein Paar Signalspulen ist zwischen der Hauptkörperseite und der Werkzeugseite angeordnet, um ein elektrisches Signal übertragen zu können.

Darüber hinaus wird in der DE 10 2016 214 699 A1 ein Verfahren zur Bearbeitung eines Werkstücks an einer mit einem Ultraschallerzeuger behafteten Werkzeugmaschine beschrieben, welches, mittels einem zusätzlich an dem Ultraschallerzeuger angebrachten Detektors, eine kontinuierliche Erkennung von Materialänderungen an einem zu bearbeitenden Werkstück vorsieht und, basierend auf den detektierten Änderungen, genauer mittels kontinuierlicher Transmission von Detektorsignalen an die Werkzeugmaschine, die Relativbewegung des genutzten Werkzeugs während der der Werkstückfertigung anpasst.

Bei einer solchen Werkzeugmaschine bilden ein Ultraschallwandler im Werkzeughalter, der die Ultraschallschwingung des Werkzeugs erzeugt, einen Schwingkörper und das im Werkzeughalter eingesetzte Werkzeug ein schwingungsfähiges System, das durch ein elektrisches Signal zu mechanischen Schwingungen angeregt wird, wobei man die größtmögliche mechanische Schwingungsamplitude erhält, wenn man das schwingungsfähige System mit seiner Resonanzfrequenz anregt.

Dabei tritt das Problem auf, dass sich die Resonanzfrequenz im Verlauf eines Bearbeitungsprozesses ändern kann. Dafür gibt es im Wesentlichen drei Gründe. Zum Einen kann sich das schwingungsfähige System oder Teile davon bei der Bearbeitung erwärmen, wodurch sich die Materialeigenschaften ändern. Dies führt zu einem Temperaturdrift der Resonanzfrequenz. Zum anderen wird die Schwingung durch den Kontakt des Werkzeugs mit dem zu bearbeitenden Werkstück durch die Bearbeitungskräfte gedämpft, wobei die Resonanzfrequenz des Systems bei einer gedämpften Schwingung niedriger ist als die freie Resonanzfrequenz des Systems. Außerdem wird durch die Ankopplung des Schwingungssystems an das Werkstück ein neues, gekoppeltes Schwingungssystem gebildet, dessen Resonanzfrequenz in der Regel höher ist als die freie Resonanzfrequenz. Diese drei Effekte treten in der Praxis kombiniert auf, wobei es von der konkreten Bearbeitungssituation abhängt, welcher Effekt dominiert.

Außerdem ist zu beachten, dass neben der Verschiebung der Resonanzfrequenz auch eine Änderung der Leistung eine Rolle spielt, da durch die Wechselwirkung des Werkzeugs mit dem Werkstück eine höhere Ausgangsspannung nötig sein kann, um die gleiche Leistung zu erzielen.

Wenn nun mit der freien Resonanzfrequenz angeregt wird, die tatsächliche Resonanzfrequenz des Systems sich bei der Bearbeitungjedoch von dieser unterscheidet, erhält man eine Schwingung des Werkzeugs mit kleinerer Amplitude, wodurch die Bearbeitung an Effizienz verliert.

Aus diesem Grund ist es wichtig, eine Änderung der Resonanzfrequenz des schwingfähigen Systems zu detektieren, um die Schwingungsparameter entsprechend anpassen zu können, so dass wieder die größtmögliche Schwingungsamplitude erreicht wird.

Aus Anwendungen des Ultraschall-Schweißens ist es bekannt, zu diesem Zweck sowohl die freie Resonanzfrequenz als auch eine Änderung der Resonanzfrequenz des Systems aus Ausgangswerten des Generators zu bestimmen, der das elektrische Signal für die mechanische Schwingung an den Piezo-Antrieb im Werkzeughalter liefert. Der Generator sieht von dem über eine induktive Übertragerstrecke angeschlossenen schwingungsfähigen System eine elektrische Impedanz, die frequenzabhängig ist und bei der mechanischen Resonanzfrequenz ein Minimum hat. Dementsprechend regelt der Generator im Fall einer Verschiebung der Resonanzfrequenz seine Frequenz so lange nach, bis er wieder das Impedanzminimum erreicht. Neben der Frequenz des Impedanzminimums ändert sich durch die Bearbeitung auch der Impedanzwert selbst, d.h. um die gleiche Leistung zu treiben ist eine höhere Ausgangsspannung notwendig.

Diese Methode eignet sich jedoch nicht für eine spanende Bearbeitung, weil dort, anders als beim Ultraschall-Schweißen die Impedanzkurven der genutzten Sonotroden mit eingesetzten Werkzeugen sehr viel komplizierter sind: Einerseits gibt es deutlich mehr Impedanzminima durch die vielen unterschiedlichen Schwingungsmoden der kompliziert geformten Werkzeuge. Andererseits sind die Einflussgrößen, die eine Verschiebung der Resonanzfrequenz bewirken, extremer in ihrer Wirkung, d.h. die Frequenzverschiebung kann derart groß sein, dass weitere Impedanzminima übersprungen werden. Beim Schweißen übt eine Sonotrode über den gesamten Prozess annähernd gleichen Druck auf das Werkstück aus. Dies führt zu einer einmaligen Frequenzverschiebung, die bei wiederkehrenden Prozessen gleich ist und bei der sich das Impedanzminimum immer eindeutig identifizieren lässt. Dagegen ändert sich die Frequenzverschiebung bei der spanenden Bearbeitung laufend aufgrund wechselnder Eingriffsverhältnisse des Werkzeugs in das Material und die Zuordnung ist wie oben beschrieben häufig nicht mehr nur aufgrund einer Impedanzmessung möglich.

Dies liegt daran, dass dort sehr viele unterschiedlich geformte Werkzeuge zum Einsatz kommen, zum Beispiel Bohrer und Fräser mit unterschiedlichen Abmessungen und Schneidwerkzeuge mit verschiedenen Schneidengeometrien, was zu einer größeren Varianz in der Form der Impedanzkurve in Vergleich zum Ultraschall-Schweißen führt. Weiterhin ist bei einer spanenden Bearbeitung im Allgemeinen die auf das schwingfähige System wirkende Kraft deutlich größer, so dass die Veränderung der Impedanzkurve sehr viel stärker ausgeprägt ist.

Zudem lässt sich aufgrund der immer wiederkehrenden Bearbeitungsschritte beim Schweißen der dominierende Frequenzverschiebungseffekt gut vorhersagen, was die möglichen Reaktionen des Systems einschränkt. Dagegen müssen bei einer spanenden Bearbeitung alle Effekte berücksichtigt werden, weswegen die Vorhersagemöglichkeiten bzw. die Möglichkeiten zur Einschränkung der Regelungsparameter unzureichend sind.

Darüber hinaus ist es nicht möglich, Biegeschwingungen o.ä. von axialen Schwingungsmoden nur aufgrund der Impedanzmessung zu unterscheiden. Ebenso gibt es rein elektrische Resonanzen, die gar keine Schwingungen erzeugen. Diese parasitären Effekte können mit den bekannten Methoden nicht erkannt werden.

Ein weiteres Problem bei der Überwachung der Schwingung basierend auf der Generatorleistung ist, dass nicht bekannt ist, welcher Anteil der Leistung tatsächlich in die Schwingungserzeugung fließt und welcher Teil in andere Prozesse wie z. B. in die Erwärmung der beteiligten Komponenten. Daher ist es möglich, dass Änderungen in der Schwingung nicht detektiert werden, weil sich zwar der Anteil der vom Generator bereitgestellten Leistung, der in die Schwingungserzeugung fließt ändert, nicht aber die gesamte, vom Generator abgegebene Leistung.

Im Lichte der vorstehenden Erwägungen wurde ein gattungsgemäßes Verfahren zum Steuern eines schwingungsfähigen Systems in der DE 10 2015 212 809 A1 beschrieben, insbesondere unter Regelung des Generators durch Ermitteln der Resonanzfrequenz und Regelung auf Basis der ermittelten Resonanzfrequenz.

Ausgehend von dem vorstehenden Stand der Technik und im Hinblick auf die vorstehenden Überlegungen hin ist es eine Aufgabe der vorliegenden Erfindung, das gattungsgemäße Verfahren weiterzubilden, um eine verbesserte Steuerung des schwingungsfähigen Systems bereitzustellen, welches verbessert auf unterschiedliche Bearbeitungsbedingungen abstimmbar ist.

Insbesondere ist es eine Aufgabe der vorliegenden Erfindung, ein Verfahren bereitzustellen, das es ermöglicht, eine höhere Bearbeitungsgenauigkeit bei der spanenden Ultraschallbearbeitung eines Werkstücks unter verschiedenen bzw. wechselnden Bearbeitungsbedingungen zu erreichen.

### ZUSAMMENFASSUNG DER ERFINDUNG

Zur Lösung der vorstehenden Aufgaben werden Gegenstände der unabhängigen Ansprüche vorgeschlagen. Die abhängigen Ansprüche beziehen sich auf vorteilhafte Ausführungsbeispiele des erfindungsgemäßen Verfahrens bzw. der erfindungsgemäßen Vorrichtungen.

Erfindungsgemäß wird eine Vorrichtung zum Steuern einer Ultraschall-Werkzeugeinheit für die spanende Bearbeitung eines Werkstücks an einer Werkzeugmaschine vorgeschlagen, umfassend eine Steuerungseinrichtung zum Steuern eines Ultraschallwandlers der an einer Arbeitsspindel der Werkzeugmaschine aufgenommenen Ultraschall-Werkzeugeinheit für die spanende Bearbeitung eines Werkstücks auf Basis eines in einen Regler eingegebenen Sensorsignals mittels eines durch den Regler betriebenen Generators, auf Grundlage eines der Ultraschall-Werkzeugeinheit zugeordneten, den Betrieb des Reglers einstellenden ersten Parametersatzes.

Erfindungsgemäß umfasst die Steuerungseinrichtung eine Speichereinrichtung zum Speichern einer Mehrzahl von Parametersätzen umfasst. Erfindungsgemäß ist die Steuerungseinrichtung dazu eingerichtet, eine Betriebseinstellung des Reglers durch Wechseln des den Betrieb des Reglers einstellenden ersten Parametersatzes auf Grundlage eines der Ultraschall-Werkzeugeinheit zugeordneten, zweiten Parametersatzes der an der Speichereinrichtung hinterlegten Mehrzahl von Parametersätzen umzuschalten.

Erfindungsgemäß ist die Steuerungseinrichtung dazu eingerichtet, das Umschalten der Betriebseinstellung des Reglers bei der Bearbeitung des Werkstücks durchzuführen.

Gemäß einem bevorzugten Ausführungsbeispiel ist die Steuerungseinrichtung dazu eingerichtet, das Umschalten der Betriebseinstellung des Reglers bei einem Wechsel der Bearbeitungsart der Bearbeitung des Werkstücks durchzuführen.

Gemäß einem bevorzugten Ausführungsbeispiel ist der erste Parametersatz einer ersten Bearbeitungsart einer Mehrzahl von Bearbeitungsarten zugeordnet und vorzugsweise ist der zweite Parametersatz einer zweiten Bearbeitungsart der Mehrzahl von Bearbeitungsarten zugeordnet.

Vorzugsweise umfassen die Mehrzahl von Bearbeitungsarten Fräsen und Bohren.

Gemäß einem bevorzugten Ausführungsbeispiel ist die Steuerungseinrichtung dazu eingerichtet, wenn die Ultraschall-Werkzeugeinheit an der Werkzeugmaschine mit einer anderen Ultraschall-Werkzeugeinheit ausgewechselt wird, eine Betriebseinstellung des Reglers durch Wechseln eines der Ultraschall-Werkzeugeinheit zugeordneten Parametersatzes auf Grundlage eines der anderen Ultraschall-Werkzeugeinheit zugeordneten Parametersatzes der an der Speichereinrichtung hinterlegten Mehrzahl von Parametersätzen umzuschalten.

Gemäß einem bevorzugten Ausführungsbeispiel ist die Steuerungseinrichtung dazu eingerichtet, wenn ein Werkzeug an der Ultraschall-Werkzeugeinheit an der Werkzeugmaschine mit einem anderen Werkzeug ausgewechselt wird, eine Betriebseinstellung des Reglers durch Wechseln eines dem Werkzeug zugeordneten Parametersatzes auf Grundlage eines dem anderen Werkzeug zugeordneten Parametersatzes der an der Speichereinrichtung hinterlegten Mehrzahl von Parametersätzen umzuschalten.

Erfindungsgemäß wird eine Werkzeugmaschine mit einer Arbeitsspindel zur Aufnahme einer Ultraschall-Werkzeugeinheit und einer Vorrichtung zum Steuern der Ultraschall-Werkzeugeinheit für die spanende Bearbeitung eines Werkstücks an der Werkzeugmaschine gemäß einem der vorstehenden Aspekte vorgeschlagen.

Erfindungsgemäß wird zudem ein Verfahren zum Steuern einer Ultraschall-Werkzeugeinheit für die spanende Bearbeitung eines Werkstücks an einer Werkzeugmaschine vorgeschlagen, umfassend Steuern eines Ultraschallwandlers der an einer Arbeitsspindel der Werkzeugmaschine aufgenommenen Ultraschall-Werkzeugeinheit für die spanende Bearbeitung eines Werkstücks auf Basis eines in einen Regler eingegebenen Sensorsignals mittels eines durch den Regler betriebenen Generators, auf Grundlage eines der Ultraschall-Werkzeugeinheit zugeordneten, den Betrieb des Reglers einstellenden ersten Parametersatzes.

Erfindungsgemäß umfasst das Verfahren das Hinterlegen bzw. Speichern einer Mehrzahl von Parametersätzen an einer Speichereinrichtung einer Steuerungseinrichtung der Werkzeugmaschine.

Erfindungsgemäß umfasst das Verfahren das Umschalten einer Betriebseinstellung des Reglers durch Wechseln des den Betrieb des Reglers einstellenden ersten Parametersatzes auf Grundlage eines der Ultraschall-Werkzeugeinheit zugeordneten, zweiten Parametersatzes der an der Speichereinrichtung hinterlegten Mehrzahl von Parametersätzen.

Erfindungsgemäß wird das Umschalten der Betriebseinstellung des Reglers bei der Bearbeitung des Werkstücks durchgeführt.

Gemäß einem bevorzugten Ausführungsbeispiel wird das Umschalten der Betriebseinstellung des Reglers bei einem Wechsel der Bearbeitungsart der Bearbeitung des Werkstücks durchgeführt.

Gemäß einem bevorzugten Ausführungsbeispiel ist der erste Parametersatz einer ersten Bearbeitungsart einer Mehrzahl von Bearbeitungsarten zugeordnet und vorzugsweise ist der zweite Parametersatz einer zweiten Bearbeitungsart der Mehrzahl von Bearbeitungsarten zugeordnet.

Gemäß einem bevorzugten Ausführungsbeispiel kann die Mehrzahl von Bearbeitungsarten Fräsen und Bohren umfassen.

Gemäß einem bevorzugten Ausführungsbeispiel umfasst das Verfahren das Auswechseln der Ultraschall-Werkzeugeinheit an der Werkzeugmaschine mit einer anderen Ultraschall-Werkzeugeinheit und das Umschalten einer Betriebseinstellung des Reglers durch Wechseln eines der Ultraschall-Werkzeugeinheit zugeordneten Parametersatzes auf Grundlage eines der anderen Ultraschall-Werkzeugeinheit zugeordneten Parametersatzes der an der Speichereinrichtung hinterlegten Mehrzahl von Parametersätzen.

Gemäß einem bevorzugten Ausführungsbeispiel umfasst das Verfahren Auswechseln eines Werkzeugs an der Ultraschall-Werkzeugeinheit an der Werkzeugmaschine mit einem anderen Werkzeug und das Umschalten einer Betriebseinstellung des Reglers durch Wechseln eines dem Werkzeug zugeordneten Parametersatzes auf Grundlage eines dem anderen Werkzeug zugeordneten Parametersatzes der an der Speichereinrichtung hinterlegten Mehrzahl von Parametersätzen.

Weitere Aspekte und deren Vorteile als auch Vorteile und speziellere Ausführungsmöglichkeiten der vorstehend beschriebenen Aspekte und Merkmale werden aus den folgenden, jedoch in keinster Weise einschränkend aufzufassenden Beschreibungen und Erläuterungen zu den angehängten Figuren beschrieben.

### KURZBESCHREIBUNG DER FIGUREN

- **Fig. 1**: zeigt beispielhaft einen Werkzeughalter in Schnittansicht, der in dem erfindungsgemäßen Verfahren eingesetzt werden kann.
- **Fig. 2**: zeigt beispielhaft einen Teil einer Werkzeugmaschine, mit der das erfindungsgemäße Verfahren ausgeführt werden kann.
- **Fig. 3**: zeigt eine beispielhafte elektrische Impedanzkurve.
- **Fig. 4**: zeigt beispielhaft schematisch ein Ausführungsbeispiel einer erfindungsgemäßen Vorrichtung.
- **Fig. 5**: zeigt ein beispielhaftes Frequenzspektrum.
- **Fig. 6**: zeigt ein Ausführungsbeispiel einer erfindungsgemäßen Vorrichtung.
- **Fig. 7**: zeigt beispielhaft eine schematische Darstellung einer Werkzeugmaschine mit einem Werkzeughalter (Werkzeugkopf), welche in dem erfindungsgemäßen Verfahren gemäß Ausführungsbeispielen eingesetzt werden kann.
- **Fig. 8**: zeigt beispielhaft unterschiedliche Impedanz- bzw. Phasenverläufe in Abhängigkeit der Frequenz.
- **Figs. 9A und 9B**: zeigen beispielhaft unterschiedliche Impedanz- bzw. Phasenverläufe in Abhängigkeit der Frequenz.

### DETAILLIERTE BESCHREIBUNG DER FIGUREN UND BEVORZUGTER AUSFÜHRUNGSBEISPIELE DER VORLIEGENDEN ERFINDUNG

Im Folgenden werden Beispiele bzw. Ausführungsbeispiele der vorliegenden Erfindung detailliert unter Bezugnahme auf die beigefügten Figuren beschrieben. Gleiche bzw. ähnliche Elemente in den Figuren können hierbei mit gleichen Bezugszeichen bezeichnet sein, manchmal allerdings auch mit unterschiedlichen Bezugszeichen.

Es sei hervorgehoben, dass die vorliegende Erfindungjedoch in keinster Weise auf die im Folgenden beschriebenen Ausführungsbeispiele und deren Ausführungsmerkmale begrenzt bzw. eingeschränkt ist, sondern weiterhin Modifikationen der Ausführungsbeispiele umfasst, insbesondere diejenigen, die durch Modifikationen der Merkmale der beschriebenen Beispiele bzw. durch Kombination einzelner oder mehrerer der Merkmale der beschriebenen Beispiele im Rahmen des Schutzumfanges der unabhängigen Ansprüche umfasst sind.

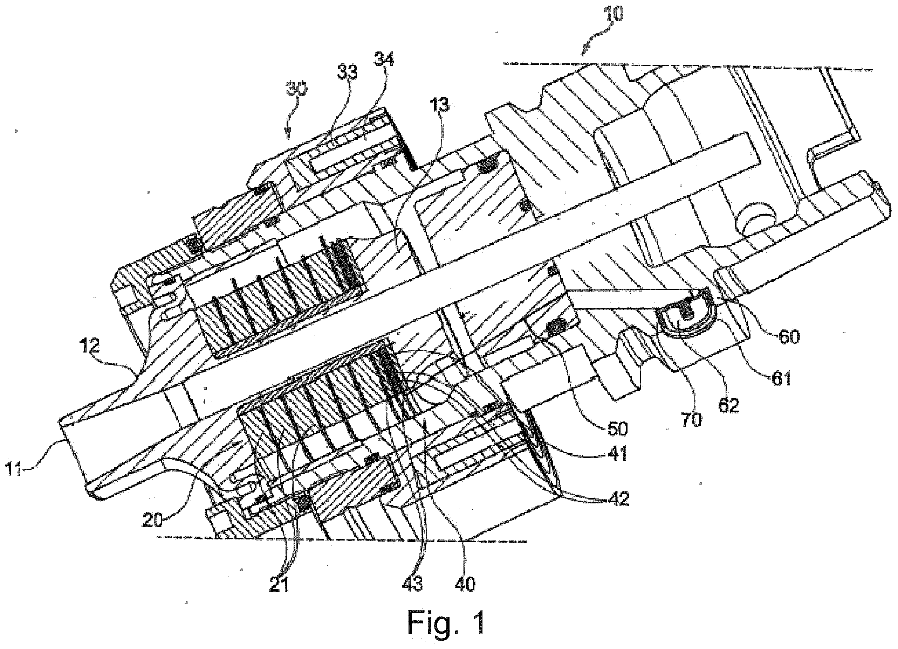

Fig. 1 zeigt einen beispielhaften Aufbau eines Werkzeughalters 10, der in dem erfindungsgemäßen Verfahren eingesetzt werden kann. An einem Ende des Werkzeughalters 10 befindet sich beispielhaft ein Werkzeugaufnahmeabschnitt 11 zur Aufnahme eines Werkzeugs 90 (nicht gezeigt).

Im Werkzeughalter 10 sind beispielhaft mehrere, z. B. sechs lochscheibenförmige erste Piezo-Elemente 21 gestapelt angeordnet, die beispielhaft über einen Übertragungsabschnitt 12 mit dem Werkzeugaufnahmeabschnitt 11 verbunden sind und einen Ultraschallwandler 20 zur Umwandlung einer elektrischen Spannung in eine mechanische Schwingung bilden.

Über den Übertragungsabschnitt 12 wird die mechanische Schwingung der ersten Piezo-Elemente 21 beispielhaft auf das Werkzeug 90 übertragen. Die ersten Piezo-Elemente 21 können beispielsweise als Piezokeramikscheiben mit dazwischen angebrachten Elektroden ausgebildet sein. Die Energieversorgung des Ultraschallwandlers 20 erfolgt beispielhaft über einen Transformator (erster Transformator), der maschinenseitig einen ersten Schalenkern 31 und eine Primärwicklung 32 umfasst (nicht gezeigt) und werkzeugseitig aus einen zweiten Schalenkern 33 und eine Sekundärspule 34 umfasst, die beispielhaft als Ringelemente an der Außenseite des Werkzeughalters 10 angeordnet sind.

Auf einer dem Werkzeugaufnahmeabschnitt 11 abgewandten Seite des Stapels aus ersten Piezo-Elementen 21 ist beispielhaft ein lochscheibenförmiges piezoelektrisches Sensorelement 40 angeordnet, das mechanisch mit den ersten Piezo-Elementen 21 gekoppelt ist, aber durch ein Isolierungselement 43, das als Keramik-Lochscheibe ausgebildet sein kann, elektrisch von den ersten Piezo-Elementen 21 isoliert ist. Durch ein weiteres Isolierungselement 43 ist das piezoelektrische Sensorelement 40 beispielhaft von einem Befestigungselement 13, z.B. einer Befestigungsmutter, elektrisch isoliert. Das Befestigungselement 13 dient beispielhaft der Befestigung des piezoelektrischen Sensorelements 40 am Ultraschallwandler 20 sowie der Vorspannung der ersten Piezo-Elemente 21 wegen der dynamischen Belastung.

Die ersten Piezo-Elemente 21 und das piezoelektrische Sensorelement 40 sind beispielhaft gleich orientiert, wodurch zum einen die Erzeugung und die Detektion der Schwingung in dergleichen Richtung ermöglicht wird und zum anderen eine platzsparende Anordnung der Elemente im Werkzeughalter 10 erreicht wird.

Das piezoelektrische Sensorelement 40 wandelt die mechanischen Schwingungen des schwingungsfähigen Systems, das das Werkzeug 90, den Übertragungsabschnitt 12, den Ultraschallwandler 20 und das piezoelektrischen Sensorelement 40 umfasst, in ein Sensorsignal S2 um, das als elektrische Spannung über eine Drahtverbindung 50 von dem piezoelektrischen Sensorelement 40 durch den Werkzeughalter 10 zu einem Senderelement 60 an der Außenseite des Werkzeughalters 10 übertragen werden kann.

Von dem Senderelement 60 wird das Sensorsignal S2 berührungslos zu einem maschinenseitigen Empfängerelement 80 (nicht gezeigt) übertragen. Das Senderelement 60 ist Teil eines weiteren Transformators (zweiter Transformator) und umfasst eine ersten Ferritkern 61 und eine Primärwicklung 62; das Empfängerelement 80 ist ebenfalls Teil des zweiten Transformators und umfasst einen zweiten Ferritkern 81 und eine Sekundärwicklung 82. Somit kann das Sensorsignal S2 induktiv vom Werkzeughalter 10 zu einer maschinenseitigen Sensorsignal-Auswertevorrichtung 110 (nicht gezeigt) übertragen werden. Alternativ ist auch eine optische Übertragung möglich, wobei das Senderelement 60 als LED und das Empfängerelement 80 als Fotodiode ausgebildet ist. Das Senderelement 60 kann so dimensioniert und positioniert sein, dass es in eine Bohrung 70 für einen Datenchip für Werkzeugdaten nach Norm DIN 69893 passt. Der Werkzeughalter 10 kann gegenüber einem ortsfesten Teil der Werkzeugmaschine (nicht gezeigt) rotierbar sein.

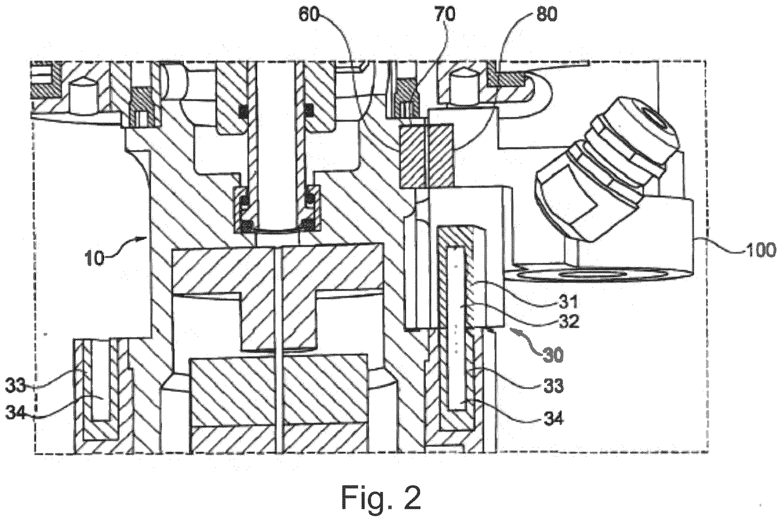

In Fig. 2 ist beispielhaft eine Anordnung der Energieübertragungsvorrichtung 30 zum Übertragen der Energie für den Ultraschallwandler 20 in den Werkzeughalter 10 in der Form eines Arbeitssignals S1 und die Anordnung des Senderelements 60 und des Empfängerelements 80 zum Übertragen des Sensorsignals S2 aus dem Werkzeughalter 10 als Schnittbild gezeigt.

Die Energieübertragungsvorrichtung 30 ist beispielhaft als Transformator (erster Transformator) mit einem ersten Schalenkern 31, einer Primärwicklung 32, einem zweiten Schalenkern 33 und einer Sekundärwicklung 34 ausgebildet, wobei die Öffnungen der Schalenkerne 31, 33 beispielhaft einander zugewandt sind und die Wicklungen 32, 34 beispielhaft in den jeweiligen Schalenkernen 31, 33 angeordnet sind. Der zweite Schalenkern 33 ist dabei beispielhaft ringförmig am Werkzeughalterumfang angeordnet; der erste Schalenkern 31 ist beispielhaft in axialer Richtung zum zweiten Schalenkern 33 beabstandet in einem maschinenseitigen Gehäuse 100 positioniert und z.B. als ein Ringsegment oder als Vollring um den Werkzeughalter 10 angeordnet. Das Arbeitssignal S1 wird somit beispielhaft in axialer Richtung (in Fig. 2 von oben nach unten) induktiv von der Primärwicklung 32 zu der Sekundärwicklung 34 übertragen.

In dem Gehäuse 100 befindet sich beispielhaft auch das Empfängerelement 80. Dem Empfängerelement 80 gegenüber ist in einem Abstand das Senderelement 60 beispielhaft in einer Bohrung 70 am Werkzeughalter 10 angeordnet. Das Sensorsignal S2 wird somit beispielhaft in radialer Richtung (in Fig. 2 von links nach rechts) von dem Senderelement 60 berührungslos auf das Empfängerelement 80 übertragen. Es können auch mehrere Senderelemente 60 umfänglich am Werkzeughalter 10 angeordnet sein, um während einer Rotation des Werkzeughalters 10 Signalverluste bei der Übertragung des Sensorsignals S2 zu reduzieren. Ebenso können mehrere Empfängerelemente 80 dem Senderelement 60 oder den Senderelementen 60 gegenüber angeordnet sein.

Bei der Rotation des Werkzeughalters 10 rotieren der zweite Schalenkern 33 und die Sekundärwicklung 34 der Energieübertragungsvorrichtung 30 sowie das Senderelement 60 mit dem Werkzeughalter 10 mit, während das Gehäuse 100 mit dem ersten Schalenkern 31 und der Primärwicklung 32 der Energieübertragungsvorrichtung 30 sowie mit dem Empfängerelement 80 z. B. an der Werkzeugspindel (nicht gezeigt) montiert ist und nicht rotiert.

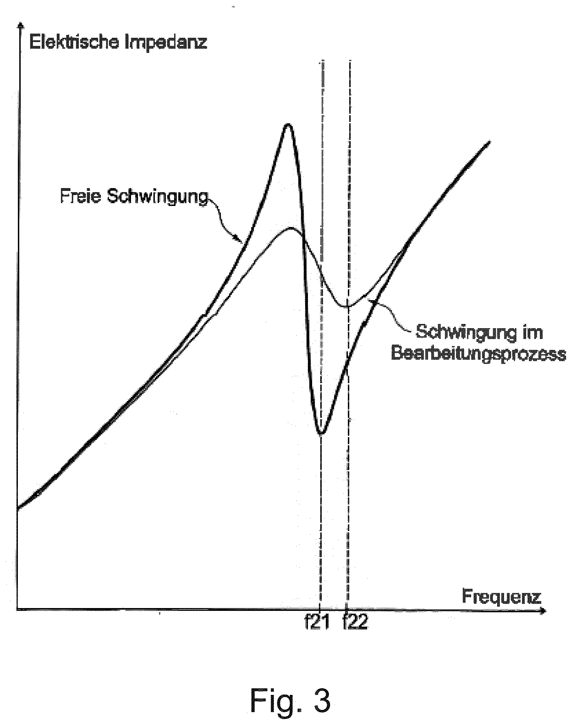

Im Folgenden wird das Verhalten des schwingungsfähigen Systems während eines Bearbeitungsprozesses beispielhaft anhand von Fig. 3 beschrieben. Das schwingungsfähige System, das in einem Ausführungsbeispiel der Erfindung den Ultraschallwandler 20 als Piezo-Antrieb, den Übertragungsabschnitt 12, das in den Werkzeugaufnahmeabschnitt 11 eingesetzte Werkzeug 90 sowie das piezoelektrische Sensorelement 40 zur Erzeugung eines Sensorsignals S2 und das Befestigungselement 13 für das piezoelektrische Sensorelement 40 aufweist, wird durch ein von einem Generator 120 erzeugtes Arbeitssignal S1, das über die Energieübertragungsvorrichtung 30 zum Ultraschallwandler 20 übertragen wird, zu einer mechanischen Schwingung angeregt. Die Arbeitsfrequenz f1 des Arbeitssignals S1 legt dabei die Frequenz der der mechanischen Schwingung fest; die vom Generator 120 abgegebene Leistung P1 bestimmt die Schwingungsamplitude. Für eine gegebene Leistung P1 wird die Schwingungsamplitude bei der Resonanzfrequenz f2 des schwingungsfähigen Systems maximal, wobei sich die Resonanzfrequenz f21 der freien Schwingung des Systems von der Resonanzfrequenz f22 des Systems während der Bearbeitung in der Regel unterscheidet.

Fig. 3 zeigt beispielhaft elektrische Impedanzkurven, die der Generator 120 von dem über den ersten Transformator 31-34 als induktive Übertragerstrecke angeschlossenen schwingungsfähigen System sieht. Die Impedanzkurve der freien Schwingung weist ein Impedanzmaximum (Serienresonanz) bei einer niedrigeren Frequenz und ein Impedanzminimum (Parallelresonanz) bei einer höheren Frequenz auf. Die Position des Impedanzminimums stimmt mit der Resonanzfrequenz f21 der freien Schwingung überein.

Während der spanenden Bearbeitung sieht der Generator 120 eine geänderte Impedanzkurve mit weniger stark ausgeprägten Extrema. Zusätzlich ist das Minimum im Vergleich zum Minimum bei der freien Schwingung verschoben. In Fig. 3 ist das Minimum während der Bearbeitung zu höheren Frequenzen hin verschoben, d.h. die Resonanzfrequenz f22 während der Bearbeitung ist in dem gezeigten Beispiel größer als die Resonanzfrequenz f21 der freien Schwingung. Es ist aber auch möglich, dass die Resonanzfrequenz f22 während der Bearbeitung kleiner wird als die Resonanzfrequenz f21 der freien Schwingung. Welcher Fall eintritt und wie stark sich Resonanzfrequenz ändert, hängt von Einfluss der Dämpfung durch die Bearbeitungskräfte, der Erwärmung des Systems während der Bearbeitung und dem Resonanzverhalten beteiligter gekoppelter Schwingungssysteme ab.

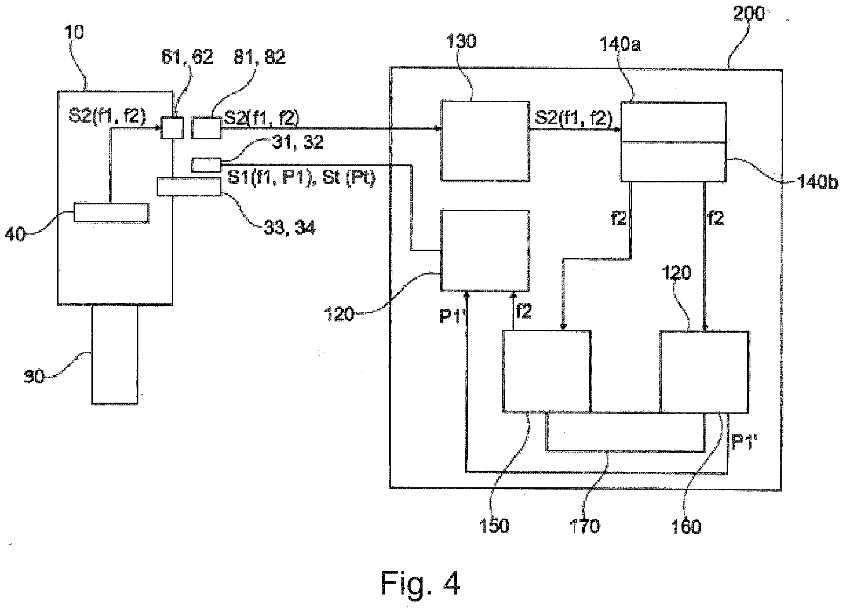

Die freie Resonanzfrequenz f21 kann aus Ausgangswerten des Generators 120, der das Arbeitssignal S1 für den Piezo-Antrieb liefert, oder mit Hilfe des erfindungsgemäßen Verfahrens, das unten anhand von Fig. 4 genauer erläutert wird, vor dem Eintritt des Werkzeugs 90 in das Werkstück bestimmt werden und als Schätzung für eine Arbeitsfrequenz f1 verwendet werden, mit der eine möglichst große Schwingungsamplitude erreicht wird. Um eine Änderung der Resonanzfrequenz f2 während der Bearbeitung zu detektieren, deren Wert dann dazu verwendet werden kann, um die Arbeitsfrequenz f1 näher an die tatsächliche Resonanzfrequenz f2 heranzuführen oder um die Leistung des Arbeitssignals S1 so zu erhöhen, dass wieder die ursprüngliche Amplitude erreicht wird, wird das erfindungsgemäße Verfahren angewandt.

Fig. 4 zeigt schematisch ein Ausführungsbeispiel einer erfindungsgemäßen Vorrichtung, mit der das erfindungsgemäße Verfahren ausgeführt werden kann. Die Vorrichtung kann Teil einer Werkzeugmaschine sein. Gezeigt ist ein Werkzeughalter 10 mit einem Sensorelement 40, dessen Aufbau dem in Fig. 1 gezeigten Werkzeughalter 10 entsprechen kann. Am Werkzeughalter 10 ist ein Werkzeug 90 zur spanenden Ultraschallbearbeitung von Werkstücken aufgenommen.

Ein Generator 120 gibt ein Arbeitssignal S1 als Antriebssignal für den Piezo-Antrieb im Werkzeughalter 10 aus. Das Arbeitssignal S1 hat die Arbeitsfrequenz f1 und wird mit der Leistung P1 über die Energieübertragungsvorrichtung 30, die als Transformator umfassend die Primärwicklung 32 samt erstem Schalenkern 31 und Sekundärwicklung 34 samt zweitem Schalenkern 33 ausgebildet ist, berührungslos in den rotierenden Werkzeughalter 10 übertragen. Außerdem gibt der Generator 120 beispielhaft ein Testsignal St einer Leistung Pt<P1 aus, das dem Arbeitssignal S1 überlagert wird und dessen Frequenz in einem Bereich um f1 variiert.

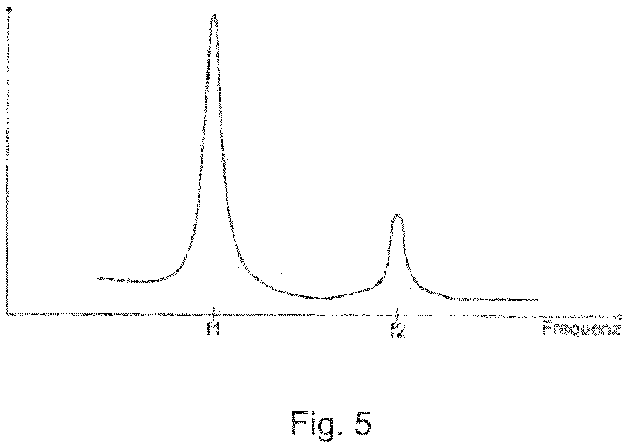

Aufgrund der Signale S1 und St wird das schwingfähige System im Werkzeughalter 10 zu einer Schwingung angeregt, deren Frequenzspektrum im Wesentlichen zwei Frequenzen aufweist. Ein beispielhaftes Frequenzspektrum ist in Fig. 5 gezeigt. Der größere Peak im Frequenzspektrum resultiert aus der erzwungenen Schwingung des Systems, die mit der Arbeitsfrequenz f1 bei verhältnismäßig hoher Leistung P1 angeregt wird. Der kleinere Peak resultiert aus der erzwungenen Schwingung des Systems, die bei um f1 variierender Frequenz angeregt wird, jedoch mit so niedriger Leistung Pt, dass diese Schwingung bei allen Frequenzen außer der momentanen Resonanzfrequenz f2 des Systems durch die Dämpfung sehr schnell abklingt.

Aufgrund der Schwingung des schwingungsfähigen Systems schwingt auch das piezoelektrische Sensorelement 40 in gleicher Weise und erzeugt so ein elektrisches Sensorsignal S2, das die Information über das Frequenzspektrum der Schwingung enthält. Das Sensorsignal S2 wird über einen weiteren Transformator, der die Primärwicklung 62 samt erstem Ferritkern 61 und Sekundärwicklung 82 samt zweitem Ferritkern 81 umfasst, berührungslos von einer Ausleseeinrichtung 130 aus dem rotierenden Werkzeughalter 10 ausgelesen und zu einer Analyseeinrichtung 140a übertragen.

Die Analyseeinrichtung 140a ermittelt beispielhaft die im Frequenzspektrum von S2 enthaltenen Frequenzen, so dass in einer Einrichtung zum Ermitteln der Resonanzfrequenz 140b, die als ein Teil der Analyseeinrichtung 140a realisiert sein kann, die Frequenz des größten Peaks im Spektrum (Hauptfrequenz) der Arbeitsfrequenz f1 zugeordnet werden kann und die Frequenz des kleineren Peaks im Spektrum (Nebenfrequenz) der Resonanzfrequenz f2 zugeordnet werden kann. Die Ausleseeinrichtung 130, die Analyseeinrichtung 140a und die Einrichtung zum Ermitteln der Resonanzfrequenz 140b können auch zu zwei Einrichtungen kombiniert werden oder als eine einzige Einrichtung realisiert sein.

Der Wert der ermittelten Resonanzfrequenz f2 wird an eine erste Regelungseinrichtung 150 übermittelt, die den Generator 120 so regelt, dass die Frequenz f1 des Arbeitssignals S1 auf den Wert der Resonanzfrequenz f2 angepasst wird.

Alternativ oder zusätzlich kann der Wert der ermittelten Resonanzfrequenz f2 an eine zweite Regelungseinrichtung 160 übermittelt werden, die den Generator 120 so regelt, dass die Leistung P1, mit der das Arbeitssignal S1 in den Werkzeughalter 10 eingestrahlt wird, auf eine Leistung P1' erhöht wird, so dass auch bei einer Anregung mit f1≠f2 die mechanische Schwingungsamplitude erreicht wird, die als maximale Amplitude bei einer Anregung mit der Resonanzfrequenz f2 erreicht würde.

Auf diese Weise kann die mechanische Schwingungsamplitude der Werkzeugspitze auf einen bestimmten Wert stabilisiert werden, was sich positiv auf die Präzision bei der spanenden Bearbeitung mit dem Werkzeug 90 auswirkt. Wenn die Schwingungsamplitude auf den bei einer bestimmten Leistung maximal möglichen Wert stabilisiert wird, erhöht sich auch die Effizienz der Werkstückbearbeitung.

Über eine Benutzerschnittstelle 170 kann ein Benutzer der Vorrichtung die erste Regelungseinrichtung 150 und/oder die zweite Regelungseinrichtung 160 steuern, so dass das Arbeitssignal S1 nur auf Befehl des Benutzers oder beim Eintritt einer festgelegten Bedingung angepasst wird. Der Benutzer kann auch festlegen, dass das Arbeitssignal S1 automatisch in regelmäßigen oder unregelmäßigen Zeitabständen basierend auf der zuletzt ermittelten Resonanzfrequenz f2 angepasst wird.

Der Generator 120, die Ausleseeinrichtung (oder Detektionseinrichtung) 130, die Analyseeinrichtung 140a und die erste Regelungseinrichtung 150 können zu einer Vorrichtung 200 zum Ausgeben von Output-Signalen und Empfangen von Input-Signalen zusammengefasst werden, wobei ein erstes Output-Signal dieser Vorrichtung 200 dem Arbeitssignal S1, ein zweites Output-Signal dem Testsignal St, und ein Input-Signal dem Sensorsignal S2 entspricht.

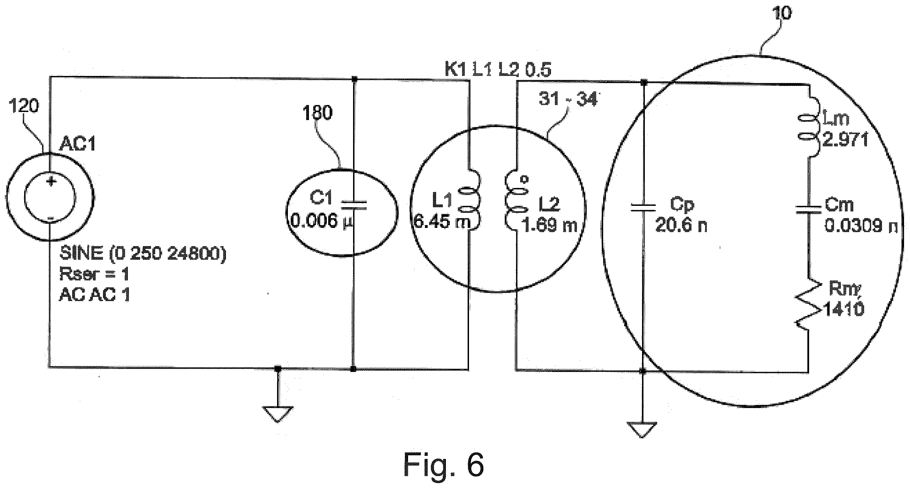

Fig. 6 zeigt ein Schaltbild der zuvor beschriebenen Komponenten mit einer beispielhaften Kompensationsschaltung. Darin ist das Ersatzschaltbild des Piezo-Antriebs im Werkzeughalter 10, des ersten Transformators 31-34 mit der Primärwicklung 32 links und der Sekundärwicklung 34 rechts und der Ultraschall-Generator 120 gezeigt. Maschinenseitig ist parallel zum Transformator 31-34 eine Kapazität 180 geschaltet, deren Wert über ein Relais 190 (nicht gezeigt) geändert werden kann.

Je nach Phasenverschiebung zwischen Spannung und Strom fließt zwischen dem Generator 120 und dem Werkzeughalter 10 Blindleistung hin und her, die keine mechanische Arbeit verrichtet und nur zur Erwärmung des Systems beiträgt. Die Blindleistung kann durch die Kapazität 180 kompensiert werden. Da jedoch die kompensierte elektrische Impedanz auch einen Frequenzgang hat, funktioniert die Kompensation bei gleichbleibendem Wert der Kapazität 180 nur bei kleinen Änderungen der Arbeitsfrequenz f1 ausreichend gut. Bei einer großen Änderung bzw. einer großen Abweichung der Resonanzfrequenz f2 von der Arbeitsfrequenz f1 wird der Wert der Kapazität 180 durch ein Relais 190 entsprechend geschaltet.

Die Kompensationsschaltung kann als eine Parallelschaltung, eine Serienschaltung oder eine Kombinationsschaltung aus Kapazitäten und/oder Induktivitäten ausgebildet sein und durch ein Relais 190 geschaltet werden.

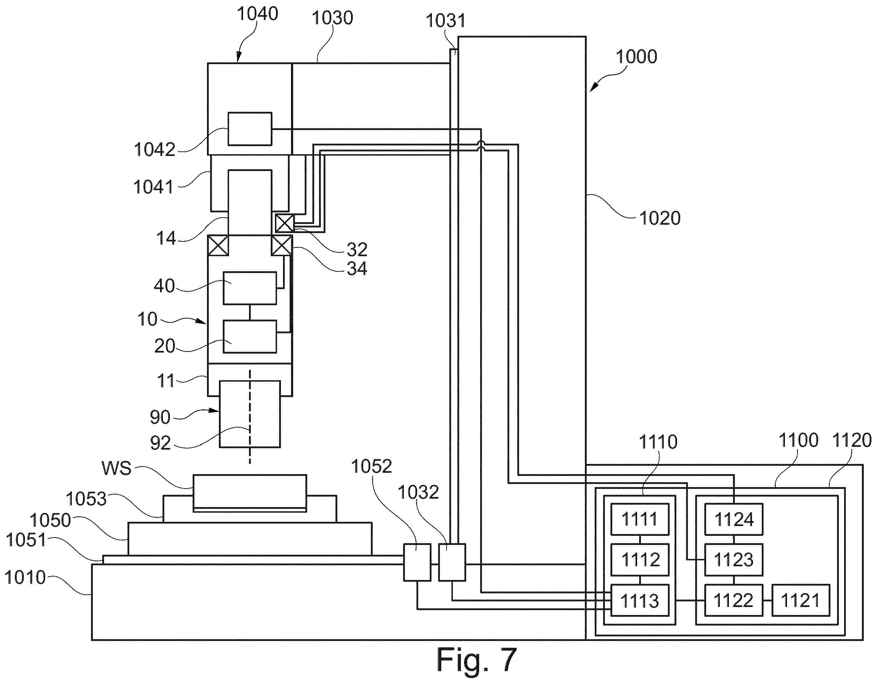

Fig. 7 zeigt beispielhaft eine schematische Darstellung einer Werkzeugmaschine 1000 gemäß einem Ausführungsbeispiel der Erfindung, mit einem Werkzeughalter 10 (Werkzeugkopf), welche in dem erfindungsgemäßen Verfahren gemäß Ausführungsbeispielen eingesetzt werden kann.

Die Werkzeugmaschine 1000 kann z.B. als numerisch steuerbare Fräsmaschine, numerisch steuerbare Universal-Fräsmaschine bzw. als numerisch steuerbares Bearbeitungszentrum ausgebildet sein. Zur Steuerung einer Relativbewegung zwischen Werkzeug und Werkstück kann die Werkzeugmaschine eine Mehrzahl von steuerbaren Linearachsen (in der Regel z.B. X-Achse, Y-Achse und/oder Z-Achse genannt) und/oder eine oder mehrere Rund- bzw. Drehachsen (in der Regel z.B. A-Achse, B-Achse und/oder C-Achse genannt) aufweisen.

Beispielhaft weist die Werkzeugmaschine 1000 in Fig. 7 ein Maschinenbett 1010, einen Maschinenständer 1020 und einen Spindelkopf 1030 auf, wobei das Maschinenbett 1010 beispielhaft einen Werkstücktisch 1050 trägt und der Spindelkopf 1030 beispielhaft eine Arbeitsspindel 1040 trägt.

Der Werkzeugtisch 1050 ist beispielhaft auf horizontalen Linearführungen 1051, die auf dem Maschinenbett 1010 in einer horizontalen Richtung angeordnet sind, in der horizontalen Richtung linear verfahrbar gelagert und ist über einen Linearantrieb 1052 einer ersten Linearachse der Werkzeugmaschine 1000 verfahrbar steuerbar. Auf dem Werkzeugtisch ist beispielhaft ein Werkstück WS in einer Werkstückspanneinrichtung 1053 eingespannt.

Der Spindelkopf 1030 ist beispielhaft auf vertikalen Linearführungen 1031, die an dem Maschinenständer 1020 in einer vertikalen Richtung angeordnet sind, in der vertikalen Richtung linear verfahrbar gelagert und ist über einen Linearantrieb 1032 einer zweiten Linearachse der Werkzeugmaschine 1000 verfahrbar steuerbar, so dass auch die Arbeitsspindel 1040, an der ein ein Werkzeug 90 haltender Werkzeugkopf 10 (Werkzeughalter) aufgenommen ist, vertikal verfahrbar ist.

In weiteren Ausführungsbeispielen können noch ein oder mehr weitere Linearachsen vorgesehen sein, z.B. um zusätzlich eine Linearbewegung des Werkstücks relativ zu dem Werkzeug in einer Richtung senkrecht zur Zeichnungsebene der Fig. 7 zu ermöglichen.

Des Weiteren können ein oder mehrere Dreh- bzw. Rundachsen vorgesehen sein, so z.B. eine Rundachse mit einem Rundachsantrieb zum Rotieren des Werkzeugtisches 1050 (sog. Drehtisch). Mittels der vorbeschriebenen Linear- und ggf. Rund bzw. Drehachsen bzw. deren Antriebe kann eine Relativbewegung des Werkzeugs 90 relativ zu dem Werkstücks WS gesteuert werden.

Hierzu weist eine Steuervorrichtung 1100 der Werkzeugmaschine 1000 eine Maschinensteuerungseinrichtung 1110 auf, die beispielhaft eine CNC- bzw. NC-Steuerungseinrichtung 1112 umfasst, die dazu eingerichtet ist, z.B. auf Basis von in einer Speichervorrichtung 1111 gespeicherten NC-Daten, die Funktionen bzw. Bearbeitungsprozesse an der Werkzeugmaschine 1000 zu steuern. Zudem weist die Maschinensteuerungseinrichtung 1110 beispielhaft eine PLC- bzw. SPS-Einrichtung 1113 auf ("PLC" für Programmable Logic Controller bzw. "SPS" für Speicherprogrammierbare Steuerung).

Die PLC- bzw. SPS-Einrichtung 1113 ist insbesondere bevorzugt dazu eingerichtet, auf Basis von Steuerbefehlen der NC-Steuerungseinrichtung 1112 oder auch ggf. autark von der NC-Steuerungseinrichtung 1112 Steuersignale an Aktoren der Werkzeugmaschine zu übersenden, so z.B. an die Linearantriebe 1052 bzw. 1032 der Linearachsen bzw. generell an Antriebe der Maschinenachsen oder auch an den Spindelantrieb 1042 der Arbeitsspindel 1040.

Zudem ist die PLC- bzw. SPS-Einrichtung 1113 dazu eingerichtet, Sensorsignale von Positionsmesssensoren (nicht gezeigt) der Werkzeugmaschine 1000, die in Echtzeit bei der Bearbeitung gemessene Ist-Positionen der Antriebe und/oder Maschinenachsen angeben, zu empfangen oder auszulesen und ggf. an die NC-Steuerungseinrichtung 1112 weiterzugeben. Die PLC- bzw. SPS-Einrichtung 1113 kann auch dazu eingerichtet sein, anderen maschineninternen oder -externen Einrichtungen bzw. Vorrichtungen zu ermöglichen, Positionsdaten an der PLC- bzw. SPS-Einrichtung 1113 auszulesen, die die Ist-Positionen der Antriebe und/oder Maschinenachsen angeben.

Die Arbeitsspindel 1040 weist neben dem vorstehend bereits erwähnten Spindelantrieb 1042 weiterhin eine Werkzeugaufnahme 1041 (Werkzeug-aufnahmeabschnitt) auf, an der der Werkzeugkopf 10 aufgenommen ist und mittels des Spindelantriebs 1042 rotatorisch angetrieben werden kann (insbesondere zur Erzeugung der Schnittbewegung).

Der Werkzeugkopf 10 ist lediglich schematisch dargestellt und weist beispielhaft einen Werkzeugschnittstellenkörper 14 (z.B. ein Werkzeugkegel, bzw. Steil- oder Hohlschaftkegel, oder auch ein Morsekegel oder andere Werkzeugschnittstellen) auf, mit dem der Werkzeugkopf 10 an der Werkzeugaufnahme 1041 der Arbeitsspindel 1040 aufgenommen ist. Beispielweise kann der Werkzeugkopf 10 analog zu Fig. 1 aufgebaut sein.

Der Werkzeugkopf 10 weist beispielhaft eine induktive Empfängereinheit 32 (z.B. analog zu der Sekundärspule bzw. -wicklung 34 der Fig. 1) auf zum kontaktlosen bzw. induktiven Empfangen eines Steuersignals von der Sendereinheit 32 (Primärspule bzw. - wicklung), die an dem Spindelkopf (bzw. an der Spindel) angebracht ist.

Beispielhaft weist der Werkzeugkopf 10 in Fig. 7 weiterhin einen Aktuator 20 (z.B. Ultraschallwandler bzw. Ultraschallerzeuger, ggf. beispielhaft umfassend eines oder mehrere Piezoelemente) und einen Sensor 40 für eine Regelung des Aktuators 20 auf. Der Aktuator 20 ist dazu eingerichtet, auf Basis des Steuersignals den Werkzeugkopf 10 bzw. das in dem Werkzeugkopf 10 aufgenommene Werkzeug 90 in eine Schwingung (insbesondere in Richtung der Werkzeugachse 92) zu versetzen, bevorzugt insbesondere im Ultraschallbereich, d.h. insbesondere bei Ultraschallfrequenzen bzw. bei Frequenzen über 10 kHz bzw. insbesondere z.B. über 15 kHz, z.B. bis zu 60 kHz.

Der Werkzeugkopf 10 weist zudem den Werkzeugaufnahmeabschnitt 11 auf, an dem das Fräswerkzeug 90 aufgenommen bzw. gehalten ist. Das Werkzeug 90 weist eine Werkzeugachse 92 auf, um die das Werkzeug über den Spindelantrieb 1042 rotierend angetrieben wird.

Zum Antreiben des Aktuators 20 bzw. zum Steuern bzw. Regeln der Schwingung des Werkzeugs 90 weist die Steuervorrichtung 1100 der Werkzeugmaschine 1000 eine weitere Steuereinrichtung 1120 (Ultraschallwandler-Steuerung) auf, die das Steuersignal auf Basis des von dem Sensorsignal des Sensors 40 (Schwingungsregelung) erzeugt und über die Sendereinheit 32 an den Werkzeugkopf 10 zum Übertragen an die Empfängereinrichtung 34 für den Aktuator 20 ausgibt. Die Steuereinrichtung 1120 kann in weiteren Ausführungsbeispielen auch in der Maschinensteuerungseinrichtung 1110 integriert sein und/oder eine externe Datenverarbeitungsvorrichtung, z.B. einen Computer, umfassen bzw. durch eine extern angeschlossene Datenverarbeitungsvorrichtung, z.B. einen Computer, ausgebildet sein.

Die Steuereinrichtung 1120 umfasst beispielhaft einen Generator 1124 (z.B. analog zum Generator 120 oben) zum Erzeugen des hochfrequenten Steuersignals, das an den Aktuator 20 ausgegeben wird. Die Frequenz des Steuersignals ist hochfrequent (d.h. insbesondere mit einer Frequenz größer 10 kHz, bevorzugt größer 15 kHz) und liegt bevorzugt im Ultraschallbereich.

Der Generator 1124 ist beispielhaft mit einer Reglereinheit 1123 verbunden, die dazu eingerichtet ist, den Betrieb des Generators 1124 zu regeln, auf Basis des an die Reglereinheit ausgegebenen Sensorsignals des Sensors 40. Die Regelung kann hierbei z.B. analog zu den vorstehend beschriebenen Aspekten durchgeführt werden.

Die Steuereinrichtung 1120 umfasst beispielhaft weiterhin eine Speichereinrichtung 1121 zum Speichern von Parameterdaten, insbesondere umfassend Regelungsparameter, die von der Steuereinrichtung 1120 als Grundlage der Steuerung des Aktuators 20 (Ultraschallwandler) verwendet werden.

Die Steuereinrichtung 1120 umfasst beispielhaft weiterhin eine Datenverarbeitungseinrichtung 1122, die dazu eingerichtet ist, die Daten aus der Speichereinrichtung 1121 auszulesen und zu verarbeiten. Insbesondere ist die Datenverarbeitungseinrichtung 1122 dazu eingerichtet, Parameterdaten aus der Speichereinrichtung 1121 auszulesen und Regelungsparameter zu bestimmen, die dem Regler 1123 als Grundlage für die Regelung des Betriebs des Generators 124 eingegeben werden.

Gemäß Ausführungsbeispielen der Erfindung ist es vorgesehen, eine Mehrzahl von Parametersätzen als Parameterdaten in der Speichereinrichtung 1121 zu speichern, wobei die jeweiligen Parametersätze verschiedenen Werkzeugen, verschiedenen Ultraschallwandlern, verschiedenen Werkzeughaltern und verschiedenen Bearbeitungsarten bzw. Bearbeitungsbedingungen zugeordnet sind.

Die Datenverarbeitungseinrichtung 1122 ist bevorzugt insbesondere dazu eingerichtet, auf Basis eines momentan verwendeten Werkzeugs, Werkzeughalters, Ultraschallwandlers und insbesondere auf Basis einer momentanen Bearbeitungsart bzw. auf Basis der momentanen Bearbeitungsbedingungen einen passenden Parametersatz aus der Speichereinrichtung 1121 auszulesen und entsprechende Regelungsparameter an den Regler 1123 auszugeben.

Hierzu ist es bevorzugt möglich, einen Parametersatzwechsel vor oder während der Bearbeitung durchzuführen, um den Regler 1123 auf Basis eines geänderten Parametersatzes bearbeitungsabhängig einzustellen.

Beispielhaft kann während der Bearbeitung bei einem Werkzeugwechsel an der Werkzeugmaschine 1000 ein Parametersatzwechsel durchgeführt werden, bei dem ein geänderter Parametersatz entsprechend des einzuwechselnden Werkzeugs, Werkzeughalters und/oder dessen Ultraschallwandler in der Speichereinrichtung 1121 ausgelesen und am Regler 1123 eingestellt wird.

Beispielhaft kann auch während der Bearbeitung an der Werkzeugmaschine 1000 ein Parametersatzwechsel durchgeführt werden, bei dem ein geänderter Parametersatz entsprechend geänderter Bearbeitungsbedingungen bzw. einer geänderten Bearbeitungsart in der Speichereinrichtung 1121 ausgelesen und am Regler 1123 eingestellt wird.

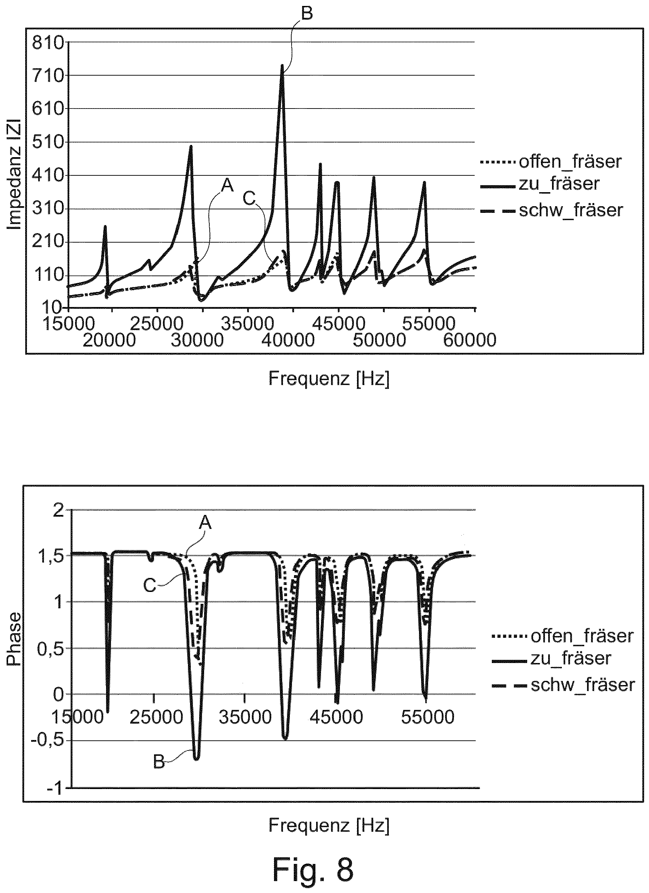

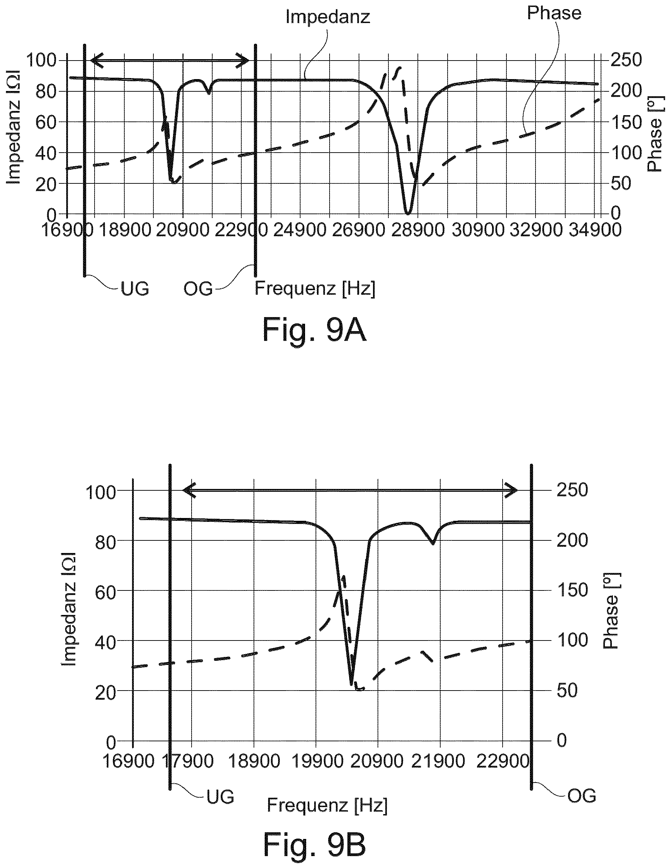

Zum Hintergrund wird auf die Figs. 8, 9A und 9B verwiesen, die jeweils unterschiedliche Impedanz- bzw. Phasenverläufe in Abhängigkeit der Frequenz dargestellt sind.

Fig. 8 zeigt insbesondere beispielhaft unterschiedliche Impedanz- bzw. zugehörige Phasenverläufe in Abhängigkeit der Frequenz über einen weiten Frequenzbereich von ca. 15 kHz bis ca. 60 kHz für unterschiedliche Werkzeuge (A: offen-fräser, B: zu-fräser bzw. C: schw-fräser).

Hierbei ist erkennbar, dass unterschiedliche Werkzeuge teils sehr unterschiedliche Impedanz- bzw. zugehörige Phasenverläufe aufweisen können, mit teils sehr unterschiedlichen Impedanz- bzw. Phasenausschlägen in den jeweiligen Minima bzw. Maxima, und auch mit verschobenen Resonanzfrequenzen. Insbesondere ist zu beachten, dass über den Frequenzbereich mehrere Maxima bzw. Minima, d.h. mehrere Resonanzen auftreten.

Grundsätzlich weist der Phasenverlauf an Resonanzstellen ein Minimum auf, so dass sich die Phase als Regelungsgröße zur Regelung des Generators 120 bzw. 1124 auf eine Resonanzstelle eignet. Der jeweilige Impedanzverlauf hat an jeder Resonanzstelle zuerst ein Maximum (Parallelresonanz) und dann folgend ein Minimum (Serienresonanz). Die Reihenfolge von Maximum und Minimum ist durch unsere induktive Energieübertragung bedingt. Bei direktem Anschluss ohne Transformator ist die Reihenfolge immer genau umgedreht (Minimum - Maximum).

Gemäß Ausführungsbeispielen ist die Regelung des Generators so ausgelegt, dass der Regler 1123 versucht, die Frequenz so einzustellen, so dass der Ultraschallwandler bzw. Aktuator 20 mit einer Frequenz im Impedanzmaximum der Resonanzstelle betrieben wird.

Es ist jedoch zu beachten, dass in Fig. 8 unterschiedliche Kurven zu erkennen sind, die hier beispielhaft immer vom gleichen Aktor 20 mit dem gleichen Sender stammen. Im Allgemeinen können folgende Faktoren die genaue Ausprägung der Kurven beeinflussen:
- die Größe des Luftspalts zwischen Sender und Empfänger,
- mechanische Toleranzen bei der Herstellung von Aktoren und Sendern,
- elektrische Toleranzen bei der Herstellung von Aktoren und Sendern, und
- etwaige Störungen innerhalb der Maschine

Aufgrund der Tatsache, dass (a) aufgrund von Toleranzen und Alterungseffekten sowie (b) durch die Nutzung sehr vieler unterschiedlicher Werkzeuge Unterschiede zwischen den einzelnen Impedanzkurven entstehen können, werden gemäß Ausführungsbeispielen die folgenden Maßnahmen vorgeschlagen:
Zur Ermittlung einer Resonanzstelle kann mittels des Generators 120/1224 ein Frequenzscan über einen größeren Frequenzbereich durchgeführt, um dabei nach den Minima in der Phasenkurve zu suchen. Diese Minima in der Phasenkurve sind in der Regel gut ausgeprägt (siehe Fig. 8) und können daher in einem Frequenzscan ermittelt werden.

In der Regel befinden sich hierbei innerhalb eines größer voreingestellten Frequenzbereiches, z.B. 15 kHz und 60 kHz, mehrere Minima (siehe Fig. 8), so dass bei Auffinden mehrerer Minima in dem Frequenzscan eine Unterscheidung durchgeführt werden kann und eine passende Resonanzstelle ausgewählt werden kann.

Bezüglich der Frequenzermittlung durch den Frequenzscan kann dem Generator eine Vorgabe gegeben werden, welche Phasenunterschiede als Resonanzstellen eingestuft werden sollen. Es kann z.B. eine maximale Tiefe und/oder eine minimale Tiefe des Minimums angeben bzw. vorgegeben werden. Insbesondere können Minima unterhalb der minimalen Tiefe als "Rauschen" ignoriert werden.

Unterschiedliche Aktoren 20 (z.B. auch mit unterschiedlichen Werkzeugen 90) können hierbei aber wiederum unterschiedlich tiefe Minima erzeugen.

Im Betrieb soll nun der Regler 1123 den Generator 1124 derart antreiben bzw. regeln, dass die Frequenz im Betrieb derart eingestellt ist, dass die Frequenz sich in der Resonanz befindet (Frequenzregelung). Hierfür kann als Regelungsgröße die Phase des Sensorsignals des Sensors 40 verwendet werden.

Andererseits kann der Regler 1123 derart eingestellt sein, dass der Generator in der Resonanz eine konstante Stromamplitude an den Aktor abgibt, da eine konstante Stromamplitude physikalisch mit einer konstanten Schwingungsamplitude verbunden ist (Stromregelung).

Durch das Ohm'sche Gesetz kann der Generator jedoch bei gegebener maximaler Ausgangsspannung U auch nur einen maximalen Strom I = U / R antreiben. Übersteigt der (z.B. durch den Bediener vorgegebene) gewünschte Ausgangsstrom diesen Wert, wird der Regler gegebenenfalls instabil, da es keinen Zustand gibt, in dem der vorgegebene Wert erreicht werden kann.

Umgekehrt kann die maximale Ausgangsspannung immer nur bis zu einer bestimmten Grenze vorgegeben werden, da für den Regler bei einer gegebenen Anzahl an Abstufungen zwischen 0V und einer Maximalspannung ansonsten die Auflösung unnötig verschlechtert würde.

Neben den reinen Impedanz-/Phasenparametern spielen auch Parameter verwendeter PID-Regler sowie potentiell weitere Parameter zur Einstellung der Frequenz- und/oder Stromregler eine Rolle: Bei PID-Reglern wird bevorzugt eine auf das zu regelnde System optimale bzw. angepasste Auslegung der der Regelung zugrundeliegenden Parameter durchgeführt, um eine genaue Bearbeitung zu ermöglichen.

Wegen der unterschiedlichen verwendbaren Aktoren und auch unterschiedlicher verwendeter Werkzeuge als auch aufgrund unterschiedlicher Bearbeitungsszenarien bzw. Bearbeitungsbedingungen oder Bearbeitungsarten eignet sich kein universeller Parametersatz.

Bevorzugt wird an der Steuereinrichtung 1120 eine Funktion ermöglicht, die es einem Bediener erlaubt, einen Werkzeughalter mit einem bestimmten Aktor bzw. auch ggf. mit einem bestimmten Werkzeug einzurichten. Hierbei können bei dem Einrichten geeignete Parameter als Grundlage für die spätere Regelung des Antreibens des Aktors ggf. in Verbindung mit einem bestimmten Werkzeugs ermittelt, ausgewählt und eingestellt werden bzw. in der Speichereinrichtung 1121 hinterlegt werden.

Hierbei kann z.B. ein Frequenzscan über einen sehr weiten Frequenzbereich (ggf. in vorgebbaren Frequenzbereichen über einen weiten Bereich und ggf. bis zur gesamten technischen Bandbreite des Generators) durchgeführt werden. Alle gefundenen Resonanzstellen können dann individuell geprüft werden, insbesondere zur Auswahl welche Resonanzstelle für den Betrieb der Maschine mit dem einzurichtenden Werkzeughalter bzw. Aktor ggf. in Verbindung mit einem bestimmten Werkzeug geeignet sind. Dafür gibt es verschiedene Möglichkeiten:
(1) Bei Bedämpfung z.B. durch Auffahren des Werkzeuges auf ein Testwerkstück reagieren z.B. nur geeigneten Resonanzen (diese werden gedämpft). Ein mögliches Einrichtverfahren würde alle Resonanzen unter Bedämpfung ansehen bzw. scannen und ungeeignete Resonanzen durch Kurvenvergleich aussortieren.
(2) Die tatsächliche mechanische Schwingung kann mittels optischer (oder anderer) Verfahren in der Maschine gemessen werden, um geeignete Resonanzen anhand der umgesetzten Schwingungsamplituden auszuwählen. Ungeeignete Resonanzstellen können z.B. aufgrund der Schwingungsform aussortiert werden.
(3) Über eine definierte Zeit kann eine Schwingung an den jeweiligen Resonanzstellen erzeugt werden und das Verhalten der Schwingung an jeder Resonanzstelle in Abhängigkeit der Zeit kann dabei beobachtet werden: Entspricht das zeitliche Verhalten einem herkömmlich Temperaturdrift, kann die entsprechende Resonanzstelle als geeignet ausgewählt werden.
(4) Zusätzliche Sensoren (z.B. Temperatursensor am Transformator) können bei eingeschalteter Schwingung Abweichungen feststellen (z.B. zu hohe Verlustleistung durch Hitzeentwicklung am Transformator), um ungeeignete Resonanzstellen auszusortieren.

Es ist weiterhin möglich, einen oder mehrere der vorstehenden Auswahlverfahren anzuwenden, um eine geeignete Resonanzstelle unter einer Mehrzahl von Resonanzstellen auszuwählen.

Nach Auswahl einer geeigneten Resonanzstelle kann der Frequenzbereich des Generators im Betrieb dann auf einen geeigneten Bereich um die ausgewählte Resonanzstelle eingeschränkt werden, insbesondere derart, dass in dem geeigneten Bereich keine weiteren Resonanzen vorliegen.

Beispielhaft sei hierbei auf Figs. 9A und 9B verwiesen. Fig. 9A zeigt einen Impedanzverlauf und einen zugehörigen Phasenverlauf über einen breiten Frequenzbereich, beispielhaft von ca. 17 kHz bis ca. 35 kHz, wobei insbesondere zwei größere Phasenminima (Resonanzstellen) im Frequenzscan erkannt werden. Hierbei ist dann beispielhaft eine Resonanzstell ausgewählt und über einen unteren Grenzwert UG und einen oberen Grenzwert OG kann ein um die ausgewählte Resonanzstelle gewählter Frequenzbereich eingestellt werden, der keine weiteren Resonanzstellen umfasst, siehe Fig. 9B (eine kleinere Resonanzstelle bei ca. 21,9 kHz kann hierbei als Rauschen ignoriert werden, da diese eine Minimaltiefe unter einer einstellbaren minimalen Tiefe aufweist).

Folglich kann der Generator durch optimierte Regelung nur innerhalb des gewählten Frequenzbereichs auf tatsächliche Änderungen der Resonanzfrequenz (z.B. durch Bedämpfung, Erwärmung) reagieren, läuft aber nicht versehentlich in eine falsche Resonanzstelle.

Zusätzlich kann eine Impedanz-/Phasenmessungvorgenommen werden. Basierend darauf wird auch die maximale Impedanz bestimmt und es wird die maximale Ausgangsspannung des Generators (durch einen Schalter) nach Bedarf gewählt. Die Messung erfolgt entweder durch einen speziellen Messkreis oder durch Aktivieren der Schwingung und Messen aller relevanten Größen während des Betriebs.

Der Regler 1123 kann einen Frequenzregler und einen Stromregler aufweisen (z.B. basierend auf PID-Reglern).

Die Reaktion des Reglers 1123 auf Änderungen der Eingangsgröße (z.B. Phase bei Frequenzregelung und/oder Strom bei Stromregelung) kann durch eine Mehrzahl von Reglerkonstanten (z.B. PID-Reglerkonstanten) eingestellt werden, z.B. durch drei Konstanten bestimmt (werden je nach Quelle z.B. mit Kp, Ti bzw. Td bezeichnet)

Weiterhin kann man zusätzlich z.B. für die Eingangsgröße ein Totband definieren, d.h. eine Änderung wird nur dann als solche betrachtet, wenn diese Größer als die Totband-Breite ist. Bei kleineren Änderungen innerhalb der Totbreite kann der Regler 1123 inaktiv bleiben (quasi abgeschaltet).

Bevorzugt wird ein derartiger Einrichtbetrieb zur Bestimmung eines geeigneten Parametersatzes für eine bestimmte Kombination Werkzeughalter (mit Sender und Aktor), bevorzugt in Verbindung mit einem bestimmten Werkzeug, ermittelt. In Ausführungsbeispielen der Erfindung werden insbesondere bevorzugt für eine Mehrzahl von bestimmten Kombinationen Werkzeughalter mit Sender und Aktor, bevorzugt in Verbindung mit einem bestimmten Werkzeug, jeweilige Einrichtbetriebe durchgeführt und jeweilige Parametersätze an der Speichereinrichtung 1121 hinterlegt.

Dies kann auch bereits auf Seiten des Werkzeugmaschinenherstellers durchgeführt werden und derartige Parametersätze können als Parameterdaten an der Werkzeugmaschine vorgespeichert sein oder später eingelesen werden. Weiterhin kann dies auch durch einen Bediener an der Werkzeugmaschine durchgeführt werden, um neue Parametersätze an der Speichereinrichtung 1121 zu hinterlegen. Je nach verwendetem System können diese Parametersätze dann aufgerufen werden, z.B. bei einem entsprechenden Werkzeugwechsel bei der Bearbeitung oder durch einen Bediener bei Einrichten eines Werkzeugs an der Werkzeugmaschine.

Weiterhin können für jeweilige Werkzeuge, jeweilige Werkzeughalter mit Ultraschallwandler (Aktor) oder bestimmte Kombinationen von Werkzeug mit Werkzeughalter jeweils verschiedene Parametersätze hinterlegt sein für verschiedene Bearbeitungsbedingungen bzw. Bearbeitungsarten, z.B. für Bohren (Bohren erzeugt üblicherweise schnelle Lastwechsel beim Ein-/Austritt am Werkstückmaterial, auf die der Regler schnell reagieren muss) bzw. für Fräsen (Fräsen erzeugt i.d.R. gleichmäßigere und langsamere Lastwechsel. Ist der Regler hier zu dynamisch, kann sich dieser aufschwingen und instabil werden).

Insbesondere ist es möglich, dass die jeweiligen bearbeitungsabhängigen Parametersätze während der Bearbeitung an der Werkzeugmaschine gewechselt werden können bzw. zwischen jeweiligen bearbeitungsabhängigen Parametersätze während der Bearbeitung an der Werkzeugmaschine je nach Bearbeitungsgart bzw. Bearbeitungsbedingungen umgeschaltet werden kann. Dies kann auch automatisch über die Datenverarbeitungseinrichtung 1122 durchgeführt werden, die z.B. in Abhängigkeit von Vorgaben der momentanen NC-Daten (z.B. auf Grundlage eines momentan ausgeführten NC-Programms) bei Wechsel der Bearbeitungsart den entsprechenden Parametersatz aus der Speichereinrichtung 1121 ausliest und den Regler 1123 entsprechend einstellt bzw. umschaltet.

Vorstehend wurden Beispiele bzw. Ausführungsbeispiele der vorliegenden Erfindung sowie deren Vorteile detailliert unter Bezugnahme auf die beigefügten Figuren beschrieben. Es sei erneut hervorgehoben, dass die vorliegende Erfindung jedoch in keinster Weise auf die vorstehend beschriebenen Ausführungsbeispiele und deren Ausführungsmerkmale begrenzt bzw. eingeschränkt ist, sondern weiterhin Modifikationen der Ausführungsbeispiele umfasst, insbesondere diejenigen, die durch Modifikationen der Merkmale der beschriebenen Beispiele bzw. durch Kombination einzelner oder mehrerer der Merkmale der beschriebenen Beispiele im Rahmen des Schutzumfanges der unabhängigen Ansprüche umfasst sind.

## Patentansprüche

1. Vorrichtung zum Steuern einer Ultraschall-Werkzeugeinheit für die spanende Bearbeitung eines Werkstücks (WS) an einer Werkzeugmaschine (1000), umfassend:
- eine Steuerungseinrichtung (1120) zum Steuern eines Ultraschallwandlers (20) der an einer Arbeitsspindel (1040) der Werkzeugmaschine (1000) aufgenommenen Ultraschall-Werkzeugeinheit für die spanende Bearbeitung eines Werkstücks (WS) auf Basis eines in einen Regler (1123) eingegebenen Sensorsignals mittels eines durch den Regler (1123) betriebenen Generators (1124), auf Grundlage eines der Ultraschall-Werkzeugeinheit zugeordneten, den Betrieb des Reglers (1123) einstellenden ersten Parametersatzes angebracht ist, wobei
die Steuerungseinrichtung (1120) eine Speichereinrichtung (1121) zum Speichern einer Mehrzahl von Parametersätzen umfasst;
**dadurch gekennzeichnet, dass**
die Steuerungseinrichtung (1120) dazu eingerichtet ist, eine Betriebseinstellung des Reglers (1123) durch Wechseln des den Betrieb des Reglers (1123) einstellenden ersten Parametersatzes auf Grundlage eines der Ultraschall-Werkzeugeinheit zugeordneten, zweiten Parametersatzes der an der Speichereinrichtung (1121) hinterlegten Mehrzahl von Parametersätzen umzuschalten, und
die Steuerungseinrichtung (1120) dazu eingerichtet ist, das Umschalten der Betriebseinstellung des Reglers (1123) bei der Bearbeitung des Werkstücks (WS) durchzuführen.

2. Vorrichtung gemäß Anspruch 1, **dadurch gekennzeichnet, dass**
die Steuerungseinrichtung (1120) dazu eingerichtet ist, das Umschalten der Betriebseinstellung des Reglers (1123) bei einem Wechsel der Bearbeitungsart der Bearbeitung des Werkstücks (WS) durchzuführen.

3. Vorrichtung gemäß einem der vorstehende Ansprüche, **dadurch gekennzeichnet, dass**
der erste Parametersatz einer ersten Bearbeitungsart einer Mehrzahl von Bearbeitungsarten zugeordnet ist und der zweite Parametersatz einer zweiten Bearbeitungsart der Mehrzahl von Bearbeitungsarten zugeordnet ist.

4. Vorrichtung gemäß Anspruch 3, **dadurch gekennzeichnet, dass**
die Mehrzahl von Bearbeitungsarten Fräsen und Bohren umfassen.

5. Vorrichtung gemäß einem der vorstehenden Ansprüche, **dadurch gekennzeichnet, dass**
die Steuerungseinrichtung (1120) dazu eingerichtet ist, wenn die Ultraschall-Werkzeugeinheit an der Werkzeugmaschine (1000) mit einer anderen Ultraschall-Werkzeugeinheit ausgewechselt wird, eine Betriebseinstellung des Reglers (1123) durch Wechseln eines der Ultraschall-Werkzeugeinheit zugeordneten Parametersatzes auf Grundlage eines der anderen Ultraschall-Werkzeugeinheit zugeordneten Parametersatzes der an der Speichereinrichtung (1121) hinterlegten Mehrzahl von Parametersätzen umzuschalten.

6. Vorrichtung gemäß einem der vorstehenden Ansprüche, **dadurch gekennzeichnet, dass**
die Steuerungseinrichtung (1120) dazu eingerichtet ist, wenn ein Werkzeug an der Ultraschall-Werkzeugeinheit an der Werkzeugmaschine (1000) mit einem anderen Werkzeug ausgewechselt wird, eine Betriebseinstellung des Reglers (1123) durch Wechseln eines dem Werkzeug zugeordneten Parametersatzes auf Grundlage eines dem anderen Werkzeug zugeordneten Parametersatzes der an der Speichereinrichtung (1121) hinterlegten Mehrzahl von Parametersätzen umzuschalten.

7. Werkzeugmaschine (1000) mit
- einer Arbeitsspindel (1040) zur Aufnahme einer Ultraschall-Werkzeugeinheit, und
- eine Vorrichtung zum Steuern der Ultraschall-Werkzeugeinheit für die spanende Bearbeitung eines Werkstücks (WS) an der Werkzeugmaschine (1000) gemäß einem der vorstehenden Ansprüche.

8. Verfahren zum Steuern einer Ultraschall-Werkzeugeinheit für die spanende Bearbeitung eines Werkstücks (WS) an einer Werkzeugmaschine (1000), umfassend:
- Steuern eines Ultraschallwandlers (20) der an einer Arbeitsspindel (1040) der Werkzeugmaschine (1000) aufgenommenen Ultraschall-Werkzeugeinheit für die spanende Bearbeitung eines Werkstücks (WS) auf Basis eines in einen Regler (1123) eingegebenen Sensorsignals mittels eines durch den Regler (1123) betriebenen Generators (1124), auf Grundlage eines der Ultraschall-Werkzeugeinheit zugeordneten, den Betrieb des Reglers (1123) einstellenden ersten Parametersatzes,
- Hinterlegen einer Mehrzahl von Parametersätzen an einer Speichereinrichtung (1121) einer Steuerungseinrichtung (1120) der Werkzeugmaschine (1000);
**gekennzeichnet durch**
- Umschalten einer Betriebseinstellung des Reglers (1123) durch Wechseln des den Betrieb des Reglers (1123) einstellenden ersten Parametersatzes auf Grundlage eines der Ultraschall-Werkzeugeinheit zugeordneten, zweiten Parametersatzes der an der Speichereinrichtung (1121) hinterlegten Mehrzahl von Parametersätzen, und
wobei das Umschalten der Betriebseinstellung des Reglers (1123) bei der Bearbeitung des Werkstücks (WS) durchgeführt wird.

9. Verfahren gemäß Anspruch 8, **dadurch gekennzeichnet, dass**
das Umschalten der Betriebseinstellung des Reglers (1123) bei einem Wechsel der Bearbeitungsart der Bearbeitung des Werkstücks (WS) durchgeführt wird.

10. Verfahren gemäß einem der vorstehende Ansprüche 8 bis 9, **dadurch gekennzeichnet, dass**
der erste Parametersatz einer ersten Bearbeitungsart einer Mehrzahl von Bearbeitungsarten zugeordnet ist und der zweite Parametersatz einer zweiten Bearbeitungsart der Mehrzahl von Bearbeitungsarten zugeordnet ist.

11. Verfahren gemäß Anspruch 10, **dadurch gekennzeichnet, dass** die Mehrzahl von Bearbeitungsarten Fräsen und Bohren umfassen.

12. Verfahren gemäß einem der vorstehenden Ansprüche 8 bis 11, **gekennzeichnet durch**
- Auswechseln der Ultraschall-Werkzeugeinheit an der Werkzeugmaschine (1000) mit einer anderen Ultraschall-Werkzeugeinheit, und
- Umschalten einer Betriebseinstellung des Reglers (1123) durch Wechseln eines der Ultraschall-Werkzeugeinheit zugeordneten Parametersatzes auf Grundlage eines der anderen Ultraschall-Werkzeugeinheit zugeordneten Parametersatzes der an der Speichereinrichtung (1121) hinterlegten Mehrzahl von Parametersätzen.

13. Verfahren gemäß einem der vorstehenden Ansprüche 8 bis 12, **gekennzeichnet durch**
- Auswechseln eines Werkzeugs (WS) an der Ultraschall-Werkzeugeinheit an der Werkzeugmaschine (1000) mit einem anderen Werkzeug (W), und
- Umschalten einer Betriebseinstellung des Reglers (1123) durch Wechseln eines dem Werkzeug (WS) zugeordneten Parametersatzes auf Grundlage eines dem anderen Werkzeug (WS) zugeordneten Parametersatzes der an der Speichereinrichtung (1121) hinterlegten Mehrzahl von Parametersätzen.

## Claims

1. Device for controlling an ultrasonic tool unit for machining a workpiece (WS) on a machine tool (1000), comprising:
- a control device (1120) for controlling an ultrasonic transducer (20) of the ultrasonic tool unit accommodated on a work spindle (1040) of the machine tool (1000) for machining a workpiece (WS) on the basis of a sensor signal input into a controller (1123) by means of a generator (1124) operated by the controller (1123), on the basis of a first parameter set assigned to the ultrasonic tool unit and setting the operation of the controller (1123), wherein
the control device (1120) comprises a storage device (1121) for storing a plurality of parameter sets;
**characterized in that**
the control device (1120) is configured to switch an operating setting of the controller (1123) by changing the first parameter set setting the operation of the controller (1123) on the basis of a second parameter set, assigned to the ultrasonic tool unit, of the plurality of parameter sets stored on the storage device (1121), and
the control device (1120) is configured to carry out the switching of the operating setting of the controller (1123) during the machining of the workpiece (WS).

2. Device according to Claim 1, **characterized in that**
the control device (1120) is configured to carry out the switching of the operating setting of the controller (1123) during a change of the machining type of the machining of the workpiece (WS).

3. Device according to one of the preceding claims, **characterized in that**
the first parameter set of a first machining type is assigned to a plurality of machining types and the second parameter set of a second machining type is assigned to the plurality of machining types.

4. Device according to Claim 3, **characterized in that**
the plurality of machining types comprises milling and drilling.

5. Device according to one of the preceding claims, **characterized in that**
the control device (1120) is configured, when the ultrasonic tool unit on the machine tool (1000) is exchanged with another ultrasonic tool unit, to switch an operating setting of the controller (1123) by changing a parameter set assigned to the ultrasonic tool unit on the basis of a parameter set, assigned to the other ultrasonic tool unit, of the plurality of parameter sets stored on the storage device (1121).

6. Device according to one of the preceding claims, **characterized in that**
the control device (1120) is configured, when a tool on the ultrasonic tool unit on the machine tool (1000) is exchanged with another tool, to switch an operating setting of the controller (1123) by changing a parameter set assigned to the tool on the basis of a parameter set, assigned to the other tool, of the plurality of parameter sets stored on the storage device (1121).

7. Machine tool (1000) having
- a work spindle (1040) for accommodating an ultrasonic tool unit, and
- a device for controlling the ultrasonic tool unit for machining a workpiece (WS) on the machine tool (1000) according to one of the preceding claims.

8. Method for controlling an ultrasonic tool unit for machining a workpiece (WS) on a machine tool (1000), comprising:
- controlling an ultrasonic transducer (20) of the ultrasonic tool unit accommodated on a work spindle (1040) of the machine tool (1000) for machining a workpiece (WS) on the basis of a sensor signal input into a controller (1123) by means of a generator (1124) operated by the controller (1123), on the basis of a first parameter set assigned to the ultrasonic tool unit and setting the operation of the controller (1123),
- storing a plurality of parameter sets on a storage device (1121) of a control device (1120) of the machine tool (1000);
**characterized by**
- switching an operating setting of the controller (1123) by changing the first parameter set setting the operation of the controller (1123) on the basis of a second parameter set, assigned to the ultrasonic tool unit, of the plurality of parameter sets stored on the storage device (1121), and
wherein the switching of the operating setting of the controller (1123) is carried out during the machining of the workpiece (WS).

9. Method according to Claim 8, **characterized in that**
the switching of the operating setting of the controller (1123) is carried out during a change of the machining type of the machining of the workpiece (WS).

10. Method according to one of the preceding Claims 8 to 9, **characterized in that**
the first parameter set of a first machining type is assigned to a plurality of machining types and the second parameter set of a second machining type is assigned to the plurality of machining types.

11. Method according to Claim 10, **characterized in that**
the plurality of machining types comprise milling and drilling.

12. Method according to one of the preceding Claims 8 to 11, **characterized by**
- exchanging the ultrasonic tool unit on the machine tool (1000) with another ultrasonic tool unit, and
- switching an operating setting of the controller (1123) by changing a parameter set assigned to the ultrasonic tool unit on the basis of a parameter set, assigned to the other ultrasonic tool unit, of the plurality of parameter sets stored on the storage device (1121).

13. Method according to one of the preceding Claims 8 to 12, **characterized by**
- exchanging a tool (WS) on the ultrasonic tool unit on the machine tool (1000) with another tool (W), and
- switching an operating setting of the controller (1123) by changing a parameter set assigned to the tool (WS) on the basis of a parameter set, assigned to the other tool (WS), of the plurality of parameter sets stored on the storage device (1121).

## Revendications

1. Dispositif de commande d'une unité d'outil à ultrasons pour l'usinage par enlèvement de copeaux d'une pièce (WS) sur une machine-outil (1000), comprenant :
- un dispositif de commande (1120) pour commander un transducteur à ultrasons (20) de l'unité d'outil à ultrasons reçue sur une broche de travail (1040) de la machine-outil (1000) pour l'usinage par enlèvement de copeaux d'une pièce (WS) sur la base d'un signal de capteur entré dans un régulateur (1123) au moyen d'un générateur (1124) actionné par le régulateur (1123), sur la base d'un premier ensemble de paramètres associé à l'unité d'outil à ultrasons et réglant le fonctionnement du régulateur (1123),
le dispositif de commande (1120) comprenant un dispositif de stockage (1121) pour stocker une pluralité d'ensembles de paramètres ;
**caractérisé en ce que**
le dispositif de commande (1120) est conçu pour commuter un réglage de fonctionnement du régulateur (1123) en changeant le premier ensemble de paramètres réglant le fonctionnement du régulateur (1123) sur la base d'un deuxième ensemble de paramètres, associé à l'unité d'outil à ultrasons, de la pluralité d'ensembles de paramètres stockés dans le dispositif de stockage (1121), et
le dispositif de commande (1120) est conçu pour effectuer la commutation du réglage de fonctionnement du régulateur (1123) lors de l'usinage de la pièce (WS).

2. Dispositif selon la revendication 1, **caractérisé en ce que**
le dispositif de commande (1120) est conçu pour effectuer la commutation du réglage de fonctionnement du régulateur (1123) lors d'un changement du type d'usinage de la pièce (WS).

3. Dispositif selon l'une des revendications précédentes, **caractérisé en ce que**
le premier ensemble de paramètres d'un premier type d'usinage est associé à une pluralité de types d'usinage et le deuxième ensemble de paramètres d'un deuxième type d'usinage est associé à la pluralité de types d'usinage.

4. Dispositif selon la revendication 3, **caractérisé en ce que**
la pluralité de types d'usinage comprennent le fraisage et le perçage.

5. Dispositif selon l'une des revendications précédentes, **caractérisé en ce que**
le dispositif de commande (1120) est conçu pour commuter, lorsque l'unité d'outil à ultrasons sur la machine-outil (1000) est remplacée par une autre unité d'outil à ultrasons, un réglage de fonctionnement du régulateur (1123) en changeant un ensemble de paramètres associé à l'unité d'outil à ultrasons sur la base d'un ensemble de paramètres associé à l'autre unité d'outil à ultrasons de la pluralité d'ensembles de paramètres stockés dans le dispositif de stockage (1121).

6. Dispositif selon l'une des revendications précédentes, **caractérisé en ce que**
le dispositif de commande (1120) est conçu pour commuter, lorsqu'un outil sur l'unité d'outil à ultrasons sur la machine-outil (1000) est remplacé par un autre outil, un réglage de fonctionnement du régulateur (1123) en changeant un ensemble de paramètres associé à l'outil sur la base d'un ensemble de paramètres associé à l'autre outil de la pluralité d'ensembles de paramètres stockés dans le dispositif de stockage (1121).

7. Machine-outil (1000) avec
- une broche de travail (1040) pour recevoir une unité d'outil à ultrasons, et
- un dispositif pour commander l'unité d'outil à ultrasons pour l'usinage par enlèvement de copeaux d'une pièce (WS) sur la machine-outil (1000) selon l'une des revendications précédentes.

8. Procédé de commande d'une unité d'outil à ultrasons pour l'usinage par enlèvement de copeaux d'une pièce (WS) sur une machine-outil (1000), comprenant :
- la commande d'un transducteur à ultrasons (20) de l'unité d'outil à ultrasons reçue sur une broche de travail (1040) de la machine-outil (1000) pour l'usinage par enlèvement de copeaux d'une pièce (WS) sur la base d'un signal de capteur entré dans un régulateur (1123) au moyen d'un générateur (1124) actionné par le régulateur (1123), sur la base d'un premier ensemble de paramètres associé à l'unité d'outil à ultrasons et réglant le fonctionnement du régulateur (1123),
- le stockage d'une pluralité d'ensembles de paramètres dans un dispositif de stockage (1121) d'un dispositif de commande (1120) de la machine-outil (1000) ;
**caractérisé par**
- la commutation d'un réglage de fonctionnement du régulateur (1123) en changeant le premier ensemble de paramètres réglant le fonctionnement du régulateur (1123) sur la base d'un deuxième ensemble de paramètres, associé à l'unité d'outil à ultrasons, de la pluralité d'ensembles de paramètres stockés dans le dispositif de stockage (1121), et
dans lequel la commutation du réglage de fonctionnement du régulateur (1123) est effectuée lors de l'usinage de la pièce (WS).

9. Procédé selon la revendication 8, **caractérisé en ce que**
la commutation du réglage de fonctionnement du régulateur (1123) est effectuée lors d'un changement du type d'usinage de la pièce (WS).

10. Procédé selon l'une des revendications précédentes 8 à 9, **caractérisé en ce que**
le premier ensemble de paramètres d'un premier type d'usinage est associé à une pluralité de types d'usinage et le deuxième ensemble de paramètres d'un deuxième type d'usinage est associé à la pluralité de types d'usinage.

11. Procédé selon la revendication 10, **caractérisé en ce que**
la pluralité de types d'usinage comprennent le fraisage et le perçage.

12. Procédé selon l'une des revendications précédentes 8 à 11, **caractérisé par**
- le remplacement de l'unité d'outil à ultrasons sur la machine-outil (1000) par une autre unité d'outil à ultrasons, et
- la commutation d'un réglage de fonctionnement du régulateur (1123) en changeant un ensemble de paramètres associé à l'unité d'outil à ultrasons sur la base d'un ensemble de paramètres associé à l'autre unité d'outil à ultrasons de la pluralité d'ensembles de paramètres stockés dans le dispositif de stockage (1121).

13. Procédé selon l'une des revendications précédentes 8 à 12, **caractérisé par**
- le remplacement d'un outil (WS) sur l'unité d'outil à ultrasons sur la machine-outil (1000) par un autre outil (W), et
- la commutation d'un réglage de fonctionnement du régulateur (1123) en changeant un ensemble de paramètres associé à l'outil (WS) sur la base d'un ensemble de paramètres associé à l'autre outil (WS) de la pluralité d'ensembles de paramètres stockés dans le dispositif de stockage (1121).
